# EUROPÄISCHE PATENTSCHRIFT

(11) **EP 4 555 202 B1**
(45) Veröffentlichungstag und Bekanntmachung des Hinweises auf die Patenterteilung: **14.01.2026**
(21) Anmeldenummer: 23732573.3
(22) Anmeldetag: 14.06.2023
(51) Int. Cl.: F01N 3/20, F01N 3/10, F01N 13/00

(54) **VERFAHREN ZUM BETREIBEN EINER ABGASANLAGE MIT EINEM SCR-KATALYSATOR FÜR EINE VERBRENNUNGSKRAFTMASCHINE, VERBRENNUNGSKRAFTMASCHINE MIT EINER ABGASANLAGE SOWIE EIN KRAFTFAHRZEUG MIT EINER VERBRENNUNGSKRAFTMASCHINE**
METHOD FOR OPERATING AN EXHAUST SYSTEM HAVING AN SCR CATALYTIC CONVERTER FOR AN INTERNAL COMBUSTION ENGINE, INTERNAL COMBUSTION ENGINE HAVING AN EXHAUST SYSTEM, AND A MOTOR VEHICLE HAVING AN INTERNAL COMBUSTION ENGINE
PROCÉDÉ DE MISE EN FONCTIONNEMENT D'UN SYSTÈME D'ÉCHAPPEMENT COMPRENANT UN CATALYSEUR SCR POUR UN MOTEUR À COMBUSTION INTERNE, MOTEUR À COMBUSTION INTERNE ÉQUIPÉ D'UN SYSTÈME D'ÉCHAPPEMENT ET VÉHICULE AUTOMOBILE ÉQUIPÉ D'UN MOTEUR À COMBUSTION INTERNE

(30) Priorität: 14.07.2022 DE 102022117681
(43) Veröffentlichungstag der Anmeldung: 21.05.2025
(73) Patentinhaber: Bayerische Motoren Werke Aktiengesellschaft, 80809 München (DE)
(72) Erfinder: STOEGER, Lukas, 3352 St. Peter in der Au (AT); MAURER, Michael, 4100 Ottensheim (AT); BARNSTEDT, Gert, 4441 Behamberg (AT)
(86) Internationale Anmeldenummer: PCT/EP2023/065950
(87) Internationale Veröffentlichungsnummer: WO 2024/012795

(56) Entgegenhaltungen:
- DE-A1- 102008 036 418
- US-A1- 2016 194 996
- US-A1- 2019 178 129

## Beschreibung

Die Erfindung betrifft ein Verfahren zum Betreiben einer Abgasanlage für eine Verbrennungskraftmaschine eines Kraftfahrzeugs, welche mit Abgas, das durch die Verbrennungskraftmaschine emittiert wird, beaufschlagt wird, und bei welchem das Abgas wenigstens einem ersten SCR-Katalysator der Abgasanlage zugeführt wird.

Weitere Aspekte der Erfindung betreffen eine Verbrennungskraftmaschine mit einer Abgasanlage sowie ein Kraftfahrzeug mit einer Verbrennungskraftmaschine.

Zur Abgasnachbehandlung von durch moderne Verbrennungskraftmaschinen emittiertem Abgas werden häufig Systeme zur selektiven katalytischen Reduktion eingesetzt, welche dazu ausgebildet sind, Stickoxide des Abgases zu reduzieren. Zweckmäßigerweise wird Ammoniak eingesetzt, welcher im Rahmen einer Thermolyse und anschließenden Hydrolyse einer als Reduktionsmittel verwendeten Harnstofflösung freigesetzt wird, die dem Abgas stromauf eines SCR-Katalysators beigemengt wird.

Dem Stand der Technik sind verschiedene Systeme und Verfahren als bekannt zu entnehmen, welche beispielsweise einen Beitrag zur Verbesserung der Abgasnachbehandlung und zusätzlich oder alternativ zur Verringerung des Verbrauchs von Harnstoff leisten.

So beschreibt beispielsweise die DE 10 2008 059 078 A1 ein Abgasnachbehandlungssystem für eine selbstzündende Brennkraftmaschine, mit einem in einer Abgasleitung eingesetzten Denox-Katalysator, einem Partikelfilter und einer Einleitvorrichtung für ein Reduktionsmittel. Der Brenner, der Partikelfilter, die Einleitvorrichtung und der Denox-Katalysator sind hierbei in dieser Reihenfolge in der Abgasleitung angeordnet.

Aus der EP 2 061 957 A0 ist hingegen ein Verfahren zum Betreiben eines SCR-Katalysatorsystems für eine Verbrennungskraftmaschine mit einem SCR-Katalysator bekannt, der geeignet ist, ein Reduktionsmittel zu speichern und unter dessen Beteiligung Stickoxide (NOx) des Abgases zu reduzieren. Das Reduktionsmittel oder eine chemische Vorstufe von diesem wird in einem Vorratsbehälter gelagert und von dort über ein Dosier- und Fördersystem dem SCR-Katalysator zugeführt. Zumindest ein Teilstrom einer in den Vorratsbehälter einströmenden Luft oder eine in dem Vorratsbehälter vorliegende Luft wird derart konditioniert, dass die relative und/oder die spezifische Luftfeuchtigkeit der Luft im Vorratsbehälter abgesenkt wird.

Die US 2016/0194996 A1 offenbart ein Verfahren zur Steuerung der Dosierung eines Dieselabgasfluids. Das Verfahren umfasst die Bereitstellung eines Dieselmotors und eines Abgassystems. Die Abgasanlage umfasst eine Abgasnachbehandlungsvorrichtung und ist mit dem Dieselmotor gekoppelt. In der Abgasanlage ist eine Einspritzvorrichtung zur Dosierung des Dieselabgasfluids in die Abgasanlage gemäß einer vorgegebenen Routine vorgesehen. Ein Wasserkondensationsgehalt der Abgasnachbehandlungseinrichtung wird ermittelt. Ein durch die vorbestimmte Routine gesteuertes Dosierungsereignis wird ausgeschlossen, so dass die Einspritzvorrichtung nicht betrieben wird, um Dieselabgasflüssigkeit an die Abgasnachbehandlungsvorrichtung zu liefern, wenn der Wasserkondensationsgehalt der Abgasnachbehandlungsvorrichtung als über einem bestimmten Schwellenwert liegend ermittelt wird.

Aufgabe der vorliegenden Erfindung ist es, ein Verfahren zur verbesserten Abgasnachbehandlung von mittels einer Verbrennungskraftmaschine emittiertem Abgas, insbesondere nach erfolgtem Kaltstart der Verbrennungskraftmaschine, bereitzustellen, bei welchem das Abgas eine zur Abgasnachbehandlung ausgebildete Abgasanlage der Verbrennungskraftmaschine durchströmt. Zudem ist es Aufgabe der Erfindung, eine Verbrennungskraftmaschine mit einer derartigen Abgasanlage sowie ein Kraftfahrzeug mit einer Verbrennungskraftmaschine bereitzustellen.

Diese Aufgabe wird durch ein Verfahren mit den Merkmalen des Patentanspruchs 1, durch eine Verbrennungskraftmaschine mit den Merkmalen des Patentanspruchs 6 sowie durch ein Kraftfahrzeug mit den Merkmalen des Patentanspruchs 7 gelöst. Vorteilhafte Ausgestaltungen mit zweckmäßigen Weiterbildungen der Erfindung sind in den Unteransprüchen angegeben.

Ein erster Aspekt der Erfindung betrifft ein Verfahren zum Betreiben einer Abgasanlage für eine Verbrennungskraftmaschine eines Kraftfahrzeugs, welche mit Abgas, das durch die Verbrennungskraftmaschine emittiert wird, beaufschlagt wird, und bei welchem das Abgas wenigstens einem ersten SCR-Katalysator der Abgasanlage zugeführt wird. Bei dem Verfahren wird wenigstens ein Vor-Betriebszustand zumindest des ersten SCR-Katalysators herangezogen. Der mittels einer Recheneinrichtung ermittelte, wenigstens eine Vor-Betriebszustand liegt zeitlich vor einem Kaltstart der Verbrennungskraftmaschine und damit auch der Abgasanlage vor. Die Recheneinrichtung kann als Motorsteuergerät, kurz ECU, der Verbrennungskraftmaschine ausgebildet sein. Denkbar ist auch, dass die Recheneinrichtung einem Kraftfahrzeug zugeordnet sein kann, welches die Verbrennungskraftmaschine aufweisen kann. Unter dem Ausdruck "Vor-Betriebszustand" ist gemäß der vorliegenden Erfindung ein Zustand zumindest des ersten SCR-Katalysators zu verstehen, welchen der erste SCR-Katalysator bereits vor dem Kaltstart, also beispielsweise vor einem, den Kaltstart einleitenden, befeuerten Betrieb der Verbrennungskraftmaschine hat. Der Vor-Betriebszustand kann sich beispielsweise durch eine Abkühlphase, beispielsweise durch einen zeitlich vor dem Kaltstart liegenden Kaltstart, auch Vor-Kaltstart genannt, ergeben, um nur ein Beispiel zu nennen. Der Kaltstart kann beim Start eines befeuerten Betriebs, also eines Betriebs durch Verbrennung von Kraftstoff, der Verbrennungskraftmaschine beginnen und beispielsweise mit Erreichen einer Anspringtemperatur (auch Light-off-Temperatur genannt) des ersten SCR-Katalysators enden.

Das Verfahren umfasst zumindest die folgenden, nach dem Kaltstart der Verbrennungskraftmaschine erfolgenden Schritte:
In einem Schritt a) erfolgt ein Beaufschlagen des ersten SCR-Katalysators mit Abgas, wodurch Stickoxide, welche auch als Stickoxid-Bestandteile bezeichnet werden können, mittels des ersten SCR-Katalysators adsorbiert werden, während zumindest in einem stromauf des ersten SCR-Katalysators angeordneten, das Abgas dem ersten SCR-Katalysator zuführenden Abgasführungsrohr der Abgasanlage Wasser aus dem Abgas auskondensiert. Hierbei kann infolge eines befeuerten Betriebs der Verbrennungskraftmaschine Abgas erzeugt und dem ersten SCR-Katalysator zugeführt werden. Aufgrund des Kaltstarts kann zumindest ein Teil (Wasseranteil) von im Abgas enthaltenen Wasser an dem kalten Abgasführungsrohr auskondensieren.

In einem Schritt b) erfolgt ein Aufheizen des Abgasführungsrohres, wodurch das aus dem Abgas auskondensierte Wasser stromauf des ersten SCR-Katalysators verdampft, wenigstens teilweise mit dem Abgas dem ersten SCR-Katalysator zugeführt und auf einer ersten Katalysatoroberfläche des ersten SCR-Katalysators adsorbiert wird. Mit zunehmender Zeitdauer nach Beginn der Kaltstarts kann durch betriebsbedingte Erwärmung der Abgasanlage und damit auch des Abgasführungsrohres ein zumindest teilweises Verdampfen des in Schritt a) auskondensierten Wassers erfolgen, welches damit von der Flüssigphase in die Gasphase übergehen und zusammen mit einem ohnehin im Abgas enthaltenen Wasseranteil dem ersten SCR-Katalysator zugeführt werden kann. Das verdampfte Wasser und der im Abgas enthaltene Wasseranteil können dann an der ersten Katalysatoroberfläche des ersten SCR-Katalysators adsorbieren.

In einem Schritt c) erfolgt eine wenigstens teilweise Reduktion von auf der ersten Katalysatoroberfläche gespeicherten Stickoxid-Bestandteilen infolge einer durch exotherme Reaktion des Wassers auf der Katalysatoroberfläche sowie durch Abgastemperaturerhöhung infolge des befeuerten Betriebs der Verbrennungskraftmaschine bewirkter Erwärmung der Katalysatoroberfläche. Die exotherme Reaktion kann durch das im Abgas enthaltene Wasser und durch das von dem Abgasführungsrohr verdampfte Wasser an der ersten Katalysatoroberfläche bewirkt werden. Die Erwärmung des ersten SCR-Katalysators kann sowohl durch die exotherme Reaktion, als auch die zunehmende Betriebsdauer der Verbrennungskraftmaschine nach Beginn des Kaltstarts bewirkt werden.

In einem Schritt d) erfolgt ein Ermitteln einer an der ersten Katalysatoroberfläche adsorbierten, dem ersten SCR-Katalysator zugeordneten, Ist-Reduktionsmittelmenge mittels der Recheneinrichtung in Abhängigkeit von der Menge des Wassers auf der ersten Katalysatoroberfläche, in Abhängigkeit von einem Massenstrom des Abgases, in Abhängigkeit von einer Katalysatortemperatur des ersten SCR-Katalysators, in Abhängigkeit von einer im ersten SCR-Katalysator adsorbierten Menge an Stickoxid-Bestandteilen sowie in Abhängigkeit von einer, dem Vor-Betriebszustand zugeordneten, an der ersten Katalysatoroberfläche adsorbierten Vor-Reduktionsmittelmenge. Anhand der Recheneinrichtung kann beispielsweise eine Modellierung der Ist-Reduktionsmittelmenge, also das Ermitteln der Ist-Reduktionsmittelmenge anhand eines Modells erfolgen. Bei dieser Modellierung kann vorzugsweise das Nox-Speicherverhalten, also das Stickoxid-Speicherverhalten zumindest des ersten SCR-Katalysators bestimmt werden.

In einem Schritt e) erfolgt ein Vergleichen einer dem ersten SCR-Katalysator zugeordneten Soll-Reduktionsmittelmenge mit der Ist-Reduktionsmittelmenge mittels der Recheneinrichtung. Die Soll-Reduktionsmittelmenge kann ein vom Betriebszustand, insbesondere vom momentanen, nach dem Kaltstart und während eines Warmlaufs der Verbrennungskraftmaschine vorliegenden, Betriebszustand der Verbrennungskraftmaschine und/oder des ersten SCR-Katalysators abhängiger Sollwert sein, welcher anhand der Recheneinrichtung (Motorsteuergerät, ECU) ermittelt werden kann.

Die Soll-Reduktionsmittelmenge kann beispielsweise gemäß einer Modellierung erfolgen, wie sie aus folgender Veröffentlichung bekannt ist: "Global kinetic modeling of NH3-SCR with two sites of NH3 storage on Cu-SSZ-13" von Zhiming et. al., Chemical Engineering Journal 406 (2021) 127120.

In einem Schritt f) erfolgt ein Zudosieren einer Kompensations-Reduktionsmittelmenge, welche einen Differenzwert zwischen der Soll-Reduktionsmittelmenge und der Ist-Reduktionsmittelmenge charakterisiert, anhand einer ersten Dosiereinheit der Abgasanlage, welche durch die Recheneinrichtung angesteuert wird und welche die Kompensations-Reduktionsmittelmenge infolge des Ansteuerns durch die Recheneinrichtung dem Abgas stromauf des ersten SCR-Katalysators beimengt. Die Recheneinrichtung kann die erste Dosiereinheit also in Abhängigkeit von dem Differenzwert ansteuern, wodurch die Kompensations-Reduktionsmittelmenge, welche durch den Differenzwert charakterisiert sein kann, dem Abgas anhand der ersten Dosiereinheit beigemengt werden kann.

Der Erfindung liegt die Erkenntnis zugrunde, dass umso weniger Stickoxid-Bestandteile am ersten SCR-Katalysator gespeichert und umgesetzt werden können, je höher die Menge des Wassers auf der Katalysatoroberfläche ist. Durch das Beimengen der anhand der Recheneinrichtung ermittelten Kompensations-Reduktionsmittelmenge kann verhindert werden, dass zu wenig oder zu viel Reduktionsmittel stromauf des ersten SCR-Katalysators eingebracht wird, wodurch insgesamt eine besonders vorteilhafte Abgasnachbehandlung erfolgen kann.

In einer weiteren vorteilhaften Weiterbildung der Erfindung wird die Ist-Reduktionsmittelmenge in Abhängigkeit von wenigstens einer an dem ersten SCR-Katalysator adsorbierten, dem Vor-Betriebszustand zugeordneten Vor-Wassermenge und/oder in Abhängigkeit von wenigstens einer an dem ersten SCR-Katalysator adsorbierten, dem Vor-Betriebszustand zugeordneten Vor-Menge an Stickoxid-Bestandteilen durch die Recheneinrichtung ermittelt. Das Heranziehen der Vor-Wassermenge und zusätzlich oder alternativ der Vor-Menge an Stickoxid-Bestandteile kann die Ist-Reduktionsmittelmenge besonders genau bestimmt werden. Hierdurch wird insbesondere berücksichtigt, welchen Zustand der erste SCR-Katalysator zeitlich vor dem Kaltstart hat, also welchem Zustand der erste SCR-Katalysator zu Beginn des Kaltstarts aufweist.

In einer weiteren vorteilhaften Weiterbildung der Erfindung wird ein stromauf des ersten SCR-Katalysators angeordneter Feuchtigkeitsspeicher der Abgasanlage herangezogen, welcher zumindest einen Teil des aus dem Abgas auskondensierten Wassers auf dessen Feuchtigkeitsspeicher-Oberfläche adsorbiert. Dies ist von Vorteil, da hierdurch eine verlängerte Speicherdauer (Adsorptionsdauer) des Wassers erzielt wird, wodurch ein Zeitpunkt der exothermen Reaktion am ersten SCR-Katalysator zeitlich nach hinten verschoben werden kann. Dadurch kann der erste SCR-Kat mehr Stickoxide nach dem Kaltstart und während des Motorwarmlaufs der Verbrennungskraftmaschine aufnehmen, zumal ein Teil des auskondensierten Wassers im Feuchtigkeitsspeicher gespeichert werden und beim Kaltstart sowie während des Motorwarmlaufs der Verbrennungskraftmaschine insgesamt trockeneres Abgas am ersten SCR-Katalysator ankommt.

In einer weiteren vorteilhaften Weiterbildung der Erfindung wird als der Feuchtigkeitsspeicher ein Oxidationskatalysator und/oder ein Stickoxid-Speicherkatalysator herangezogen. Dies ist von Vorteil, da somit einerseits die Wassereinspeicherung, also auch die Abgasnachbehandlung ermöglicht ist, sofern als der Feuchtigkeitsspeicher ein Oxidationskatalysator und zusätzlich oder alternativ ein Stickoxid-Speicherkatalysator herangezogen, also verwendet, wird.

In einer weiteren vorteilhaften Weiterbildung der Erfindung wird ein stromab des ersten SCR-Katalysators angeordneter, zweiter SCR-Katalysator zur Abgasnachbehandlung herangezogen. Der zweite SCR-Katalysator ermöglicht eine besonders vorteilhafte Abgasnachbehandlung über ein breiteres Einsatzspektrum.

Ein zweiter Aspekt der Erfindung betrifft eine Verbrennungskraftmaschine mit einer Abgasanlage, ausgebildet zur Durchführung eines gemäß dem ersten Aspekt der Erfindung. Die Abgasanlage gestattet einen besonders schadstoffarmen Betrieb der Verbrennungskraftmaschine.

Ein dritter Aspekt der Erfindung betrifft ein Kraftfahrzeug mit einer Verbrennungskraftmaschine gemäß dem zweiten Aspekt der Erfindung. Dieses Kraftfahrzeug kann besonders schadstoffarm anhand der Verbrennungskraftmaschine angetrieben werden.

Die in Bezug auf einen der Aspekte vorgestellten, bevorzugten Ausführungsformen und deren Vorteile gelten entsprechend für die jeweils anderen Aspekte der Erfindung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:

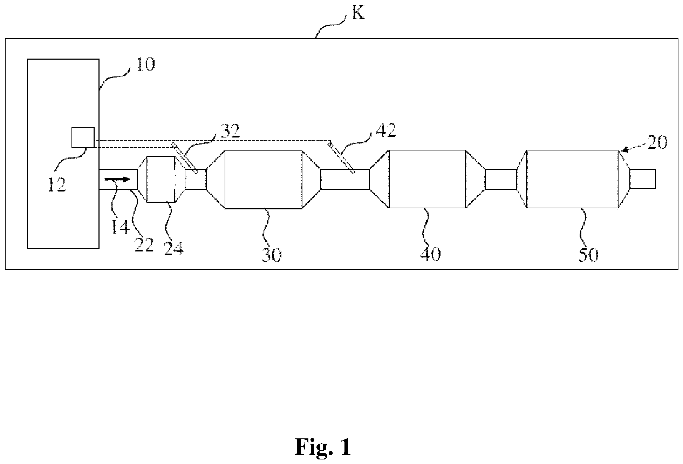

- Fig. 1: eine schematische Darstellung eines Kraftfahrzeugs, welches eine Verbrennungskraftmaschine mit einer Abgasanlage umfasst, die mit anhand der Verbrennungskraftmaschine emittiertem Abgas durchströmt wird, das durch ein Abgasführungsrohr der Abgasanlage und nacheinander durch einen als Oxidationskatalysator ausgebildeten Feuchtigkeitsspeicher, durch einen ersten SCR-Katalysator, einen zweiten SCR-Katalysator und einen Schalldämpfer der Abgasanlage durchtritt;

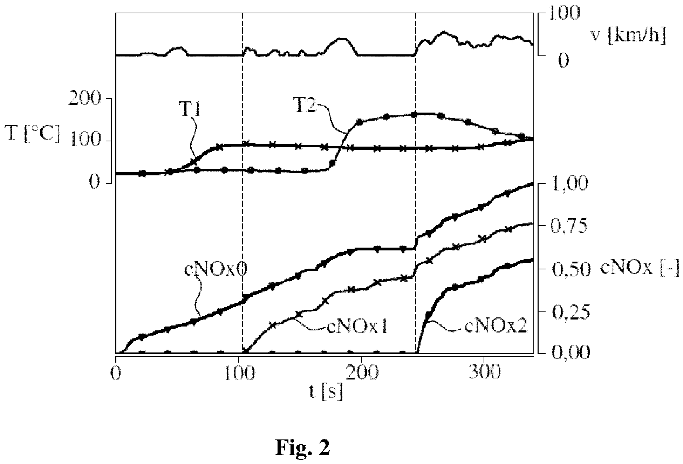

- Fig. 2: ein Diagramm, bei welchem bei einem Kaltstart der Verbrennungskraftmaschine über der Zeit beispielhaft eine Fahrzeuggeschwindigkeit des Kraftfahrzeugs, eine erste Katalysatortemperatur des ersten SCR-Katalysators, eine zweite Katalysatortemperatur des zweiten Katalysators, sowie kumulierte Stickoxid-Emissionen des Abgases vor der Abgasnachbehandlung durch den Oxidationskatalysator, kumulierte Stickoxid-Emissionen des Abgases nach dem ersten SCR-Katalysator und kumulierte Stickoxid-Emissionen des Abgases nach dem zweiten SCR-Katalysator aufgetragen sind; und

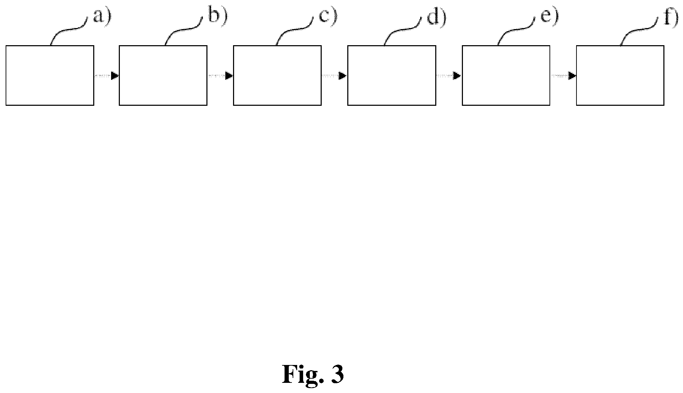

- Fig. 3: ein Flussdiagramm, welches verschiedene Verfahrensschritte eines Verfahrens zum Betreiben der Abgasanlage der das Kraftfahrzeug antreibenden Verbrennungskraftmaschine zeigt.

Fig. 1 zeigt exemplarisch ein Kraftfahrzeug K mit einer Verbrennungskraftmaschine 10. Die Verbrennungskraftmaschine 10 weist eine Abgasanlage 20 auf. Anhand der Verbrennungskraftmaschine 10 und der Abgasanlage 20 kann ein Verfahren zum Betreiben der Abgasanlage 20 durchgeführt werden, dessen wesentliche Verfahrensschritte schematisch in Fig. 3 dargestellt sind.

Bei dem Verfahren zum Betreiben der Abgasanlage 20 der Verbrennungskraftmaschine 10 wird die Abgasanlage 20 mit Abgas 14, das durch die Verbrennungskraftmaschine 10 emittiert wird, beaufschlagt. Das durch ein Abgasführungsrohr 22 der Abgasanlage 20 geführte Abgas 14 strömt zunächst durch einen Feuchtigkeitsspeicher 24 der Abgasanlage 20. Der Feuchtigkeitsspeicher 24 kann als Oxidationskatalysator und zusätzlich oder alternativ als Stickoxid-Speicherkatalysator ausgebildet sein. Anschließend durchströmt das Abgas 14 nacheinander einen motornahen ersten SCR-Katalysator 30, einen ebenfalls zur Abgasnachbehandlung herangezogenen, zweiten SCR-Katalysator 40, der vorliegend als Unterboden-SCR-Katalysator ausgebildet ist, sowie einen Schalldämpfer 50. Die Abgasanlage 20 kann noch weitere Katalysatoren oder Filter umfassen, welche vorliegend jedoch nicht weiter gezeigt sind. Zur Beimengung von Reduktionsmittel, insbesondere einer wässrigen Harnstofflösung ist stromauf des ersten SCR-Katalysator 30 eine erste Dosiereinheit 32 und stromauf des zweiten SCR-Katalysator 40 eine zweite Dosiereinheit 42 angeordnet. Die Verbrennungskraftmaschine 10 weist eine auch als ECU bezeichnete Recheneinrichtung 12 auf, anhand welcher beispielsweise die beiden Dosiereinheiten 32, 42 angesteuert werden können.

Nach einem Kaltstart der Verbrennungskraftmaschine 10 erfolgend die in Fig. 3 dargestellten Schritte a) - f). Bei dem Verfahren wird ein zeitlich vor dem Kaltstart vorliegender, mittels der Recheneinrichtung 12 der Verbrennungskraftmaschine 10 ermittelter Vor-Betriebszustand zumindest des ersten SCR-Katalysators 30 herangezogen.

In einem Schritt a) erfolgt ein Beaufschlagen des ersten SCR-Katalysators 30 mit Abgas 14, wodurch Stickoxide mittels des ersten SCR-Katalysators 30 adsorbiert werden, während in dem stromauf des ersten SCR-Katalysators 30 angeordneten, das Abgas 14 dem ersten SCR-Katalysator 30 zuführenden Abgasführungsrohr 22 der Abgasanlage Wasser aus dem Abgas 14 auskondensiert. Der stromauf des ersten SCR-Katalysators 30 angeordnete Feuchtigkeitsspeicher 24 der Abgasanlage 20 kann zumindest einen Teil des aus dem Abgas 14 auskondensierten Wassers auf einer Feuchtigkeitsspeicher-Oberfläche des Feuchtigkeitsspeichers 24 adsorbieren.

In einem Schritt b) erfolgt ein durch den befeuerten Betrieb der Verbrennungskraftmaschine 10 bedingtes Aufheizen des Abgasführungsrohres 22, wodurch das aus dem Abgas 14 auskondensierte Wasser stromauf des ersten SCR-Katalysators 30 verdampft, wenigstens teilweise mit dem Abgas 14 dem ersten SCR-Katalysator 30 zugeführt und auf einer ersten Katalysatoroberfläche des ersten SCR-Katalysators 30 adsorbiert wird.

In einem Schritt c) erfolgt eine wenigstens teilweise Reduktion von auf der ersten Katalysatoroberfläche gespeicherten Stickoxid-Bestandteilen infolge einer durch exotherme Reaktion des Wassers auf der ersten Katalysatoroberfläche sowie durch Abgastemperaturerhöhung infolge des befeuerten Betriebs der Verbrennungskraftmaschine 10 bewirkten Erwärmung der ersten Katalysatoroberfläche, welche vorliegend als Zeolithoberfläche ausgebildet ist.

In einem Schritt d) erfolgt ein Ermitteln einer an der ersten Katalysatoroberfläche adsorbierten, dem ersten SCR-Katalysator 30 zugeordneten, Ist-Reduktionsmittelmenge mittels der Recheneinrichtung 12 in Abhängigkeit von der Menge des Wassers auf der ersten Katalysatoroberfläche, in Abhängigkeit von einem Massenstrom des Abgases 14, in Abhängigkeit von einer (ersten) Katalysatortemperatur T1 des ersten SCR-Katalysators 30, in Abhängigkeit von einer im ersten SCR-Katalysator 30 adsorbierten Menge an Stickoxid-Bestandteilen sowie in Abhängigkeit von einer, dem Vor-Betriebszustand zugeordneten, an der ersten Katalysatoroberfläche adsorbierten Vor-Reduktionsmittelmenge.

Die Ist-Reduktionsmittelmenge kann zudem in Abhängigkeit von wenigstens einer an dem ersten SCR-Katalysator 30 adsorbierten, dem Vor-Betriebszustand zugeordneten Vor-Wassermenge und zusätzlich oder alternativ in Abhängigkeit von wenigstens einer an dem ersten SCR-Katalysator 30 adsorbierten, dem Vor-Betriebszustand zugeordneten Vor-Menge an Stickoxid-Bestandteilen durch die Recheneinrichtung 12 ermittelt werden.

Die gespeicherten Stickoxid-Bestandteile können einerseits aus dem Vor-Betriebszustand resultierende Stickoxide, insbesondere die Vor-Menge an Stickoxid-Bestandteilen, umfassen, welche bereits vor dem Kaltstart in dem ersten SCR-Katalysator 30 gespeichert sein können und andererseits nach dem Kaltstart und während des Warmlaufs der Verbrennungskraftmaschine 10 zusätzlich in dem ersten SCR-Katalysator 30 gespeicherte Stickoxide. Ähnliches gilt auch für an dem ersten SCR-Katalysator 30 adsorbiertes Wasser, welches sich aus der Vor-Wassermenge (resultierend aus dem Vor-Betriebszustand) und der ab dem Beginn des Kaltstarts an dem ersten SCR-Katalysator 30 adsorbierten Menge des Wassers (auf der ersten Katalysatoroberfläche) zusammensetzen kann.

In einem Schritt e) erfolgt ein Vergleichen einer dem ersten SCR-Katalysator 30 zugeordneten Soll-Reduktionsmittelmenge mit der Ist-Reduktionsmittelmenge mittels der Recheneinrichtung 12.

In einem Schritt f) erfolgt schließlich ein Zudosieren einer Kompensations-Reduktionsmittelmenge, welche einen Differenzwert zwischen der Soll-Reduktionsmittelmenge und der Ist-Reduktionsmittelmenge charakterisiert, anhand der ersten Dosiereinheit 32 der Abgasanlage 20, welche durch die Recheneinrichtung 12 angesteuert wird und welche die Kompensations-Reduktionsmittelmenge infolge des Ansteuerns durch die Recheneinrichtung 12 dem Abgas 14 stromauf des ersten SCR-Katalysators 30 beimengt.

Es ist klar, dass die in Bezug auf den ersten SCR-Katalysator 30 durchgeführten Verfahrensschritte a) - f) auch in Bezug auf den zweiten SCR-Katalysator 40 durchgeführt werden können. Ein aus dem ersten SCR-Katalysator 30 austretender und in den zweiten SCR-Katalysator 40 eintretender Abgasstrom ist dabei als in den zweiten SCR-Katalysator 40 eintretendes Abgas zugrunde zu legen. Hierbei wird berücksichtigt, dass nicht nur der Feuchtigkeitsspeicher 24, sondern auch der erste SCR-Katalysator 30 während des Kaltstarts Wasser aus dem Abgas adsorbieren. Eine exotherme, wasserbedingte Reaktion an dem zweiten SCR-Katalysator 40 erfolgt demensprechend zeitversetzt und damit später als die an dem ersten SCR-Katalysator 30 einsetzende exotherme Reaktion.

Dies ist auch beispielsweise anhand von Fig. 2 zu erkennen, einem Diagramm, bei welchem über der Zeit s mit der Einheit [s] folgende Größen aufgetragen sind: eine Temperatur T mit der Einheit [°C]; eine Fahrzeuggeschwindigkeit v mit der Einheit [km/h]; eine kumulierte Stickoxidemission cNOx (einheitslos; [-]).

Fig. 2 zeigt, dass zu Beginn des Kaltstarts bei t=0 die erste Katalysatortemperatur T1 des ersten SCR-Katalysators 30 deutlich vor einer zweiten Katalysatortemperatur T2 des zweiten SCR-Katalysators 40 ansteigt. Der zeitversetzte Anstieg der zweiten Katalysatortemperatur T2 resultiert daraus, dass die exotherme, wasserbedingte Reaktion an dem zweiten SCR-Katalysator 40 später einsetzt als an dem ersten SCR-Katalysator 30. Die jeweiligen Katalysatortemperatur T1, T2 können an den jeweiligen Katalysatoroberflächen der jeweiligen SCR-Katalysatoren 30, 40 anliegen. Die Katalysatortemperaturen T1, T2 können vorzugsweise modelliert sein oder beispielsweise durch jeweilige mit der Recheneinrichtung 12 signalübertragend verbundene Temperatursensoren der Abgasanlage 20 gemessen werden.

Je länger das Abgasführungsrohr 22 und je größer eine Wasserspeicherkapazität des Feuchtigkeitsspeichers 24 ist, desto länger kann kondensiertes Wasser zurückgehalten werden, bevor das Wasser den ersten SCR-Katalysators 30 und nachfolgend den zweiten SCR-Katalysator 40 erreicht. Mit anderen Worten kann damit ein jeweiliger Zeitpunkt eines Beginns der jeweiligen exothermen, wasserbedingten Reaktion in den jeweiligen SCR-Katalysatoren 30, 40 hinausgezögert werden. Dieser Beginn der jeweiligen exothermen Reaktion ist anhand jeweiliger steiler Anstiege der jeweiligen Katalysatortemperaturen T1, T2 in Fig. 2 zu erkennen.

Hierzu sei mit Bezug auf Fig. 2 auf die Kurven cNOx0, cNOx1 und cNOx2 verwiesen. cNOx0 gibt dabei eine Stickoxidkonzentration der Rohemission im Abgas 14 der Verbrennungskraftmaschine 10 an, welche stromauf des Feuchtigkeitsspeichers 24 vorliegen. Zudem bezeichnet cNOx1 eine Stickoxidkonzentration des Abgases 14 nach dem ersten SCR-Katalysator 30 und vor dem zweiten SCR-Katalysator 40, wohingegen cNOx2 eine Stickoxidkonzentration des Abgases 14 nach zweitem SCR-Katalysator 40 angibt.

Durch den zeitlichen Versatz, also das Hinauszögern der exothermen Reaktion kommt entsprechend über einen längeren Zeitraum nach Beginn des Kaltstarts trockeneres Abgas an den jeweiligen SCR-Katalysatoren 30, 40 an, wodurch der erste SCR-Katalysator 30, bzw. der zweite SCR-Katalysator 40 mehr Stickoxide nach dem Kaltstart und während des Motorwarmlaufs der Verbrennungskraftmaschine 10 aufnehmen können und mithin eine verbesserte Abgasreinigung bewirken werden kann.

Durch das Verfahren kann unter diesen Umständen eine besonders bedarfsgerechte Reduktionsmitteldosierung über die Dosiereinheiten 32, 42 erfolgen. Anhand des Verfahren kann das Sickoxid-Speicherverhalten des ersten SCR-Katalysators 30 und des zweiten SCR-Katalysators 40 besonders genau in Abhängigkeit von den genannten Größen, wie beispielsweise den, dem Vor-Betriebszustand zugeordneten Größen und den während des Kaltstarts vorliegenden Größen (beispielsweise der Katalysatortemperaturen T1, T2), bestimmt werden.

### Bezugszeichenliste

- 10: Verbrennungskraftmaschine
- 12: Recheneinrichtung
- 14: Abgas
- 20: Abgasanlage
- 22: Abgasführungsrohr
- 24: Feuchtigkeitsspeicher
- 30: erster SCR-Katalysator
- 32: erste Dosiereinheit
- 40: zweiter SCR-Katalysator
- 42: zweite Dosiereinheit
- 50: Schalldämpfer
- K: Kraftfahrzeug
- t: Zeit
- T: Temperatur
- T1: erste Katalysatortemperatur
- T2: zweite Katalysatortemperatur
- v: Fahrzeuggeschwindigkeit
- cNOx: kumulierte Stickoxidemission
- cNOx0: Stickoxidkonzentration Rohemission
- cNOx1: Stickoxidkonzentration
- cNOx2: Stickoxidkonzentration

## Patentansprüche

1. Verfahren zum Betreiben einer Abgasanlage (20) für eine Verbrennungskraftmaschine (10) eines Kraftfahrzeugs (K), welche mit Abgas (14), das durch die Verbrennungskraftmaschine (10) emittiert wird, beaufschlagt wird, und bei welchem das Abgas (14) wenigstens einem ersten SCR-Katalysator (30) der Abgasanlage (20) zugeführt wird, umfassend zumindest die folgenden, nach einem Kaltstart der Verbrennungskraftmaschine (10) erfolgenden Schritte, wobei bei dem Verfahren wenigstens ein zeitlich vor dem Kaltstart vorliegender, mittels einer Recheneinrichtung (12) ermittelter Vor-Betriebszustand zumindest des ersten SCR-Katalysators (30) herangezogen wird:
a. Beaufschlagen des ersten SCR-Katalysators (30) mit Abgas (14), wodurch Stickoxide mittels des ersten SCR-Katalysators (30) adsorbiert werden, während zumindest in einem stromauf des ersten SCR-Katalysators (30) angeordneten, das Abgas (14) dem ersten SCR-Katalysator (30) zuführenden Abgasführungsrohr (22) der Abgasanlage Wasser aus dem Abgas (14) auskondensiert;
b. Aufheizen des Abgasführungsrohres (22), wodurch das aus dem Abgas (14) auskondensierte Wasser stromauf des ersten SCR-Katalysators (30) verdampft, wenigstens teilweise mit dem Abgas (14) dem ersten SCR-Katalysator (30) zugeführt und auf einer ersten Katalysatoroberfläche des ersten SCR-Katalysators (30) adsorbiert wird;
c. Wenigstens teilweise Reduktion von auf der ersten Katalysatoroberfläche gespeicherten Stickoxid-Bestandteilen infolge einer durch exotherme Reaktion des Wassers auf der Katalysatoroberfläche sowie durch Abgastemperaturerhöhung infolge des befeuerten Betriebs der Verbrennungskraftmaschine (10) bewirkten Erwärmung der Katalysatoroberfläche;
d. Ermitteln einer an der ersten Katalysatoroberfläche adsorbierten, dem ersten SCR-Katalysator (30) zugeordneten, Ist-Reduktionsmittelmenge mittels der Recheneinrichtung (12) in Abhängigkeit von der Menge des Wassers auf der ersten Katalysatoroberfläche, in Abhängigkeit von einem Massenstrom des Abgases (14), in Abhängigkeit von einer Katalysatortemperatur (T1) des ersten SCR-Katalysators (30), in Abhängigkeit von einer im ersten SCR-Katalysator (30) adsorbierten Menge an Stickoxid-Bestandteilen sowie in Abhängigkeit von einer, dem Vor-Betriebszustand zugeordneten, an der ersten Katalysatoroberfläche adsorbierten Vor-Reduktionsmittelmenge;
e. Vergleichen einer dem ersten SCR-Katalysator (30) zugeordneten Soll-Reduktionsmittelmenge mit der Ist-Reduktionsmittelmenge mittels der Recheneinrichtung (12);
f. Zudosieren einer Kompensations-Reduktionsmittelmenge, welche einen Differenzwert zwischen der Soll-Reduktionsmittelmenge und der Ist-Reduktionsmittelmenge charakterisiert, anhand einer ersten Dosiereinheit (32) der Abgasanlage (20), welche durch die Recheneinrichtung (12) angesteuert wird und welche die Kompensations-Reduktionsmittelmenge infolge des Ansteuerns durch die Recheneinrichtung (12) dem Abgas (14) stromauf des ersten SCR-Katalysators (30) beimengt.

2. Verfahren nach Anspruch 1,
**dadurch gekennzeichnet, dass**
die Ist-Reduktionsmittelmenge in Abhängigkeit von wenigstens einer an dem ersten SCR-Katalysator (30) adsorbierten, dem Vor-Betriebszustand zugeordneten Vor-Wassermenge und/oder in Abhängigkeit von wenigstens einer an dem ersten SCR-Katalysator (30) adsorbierten, dem Vor-Betriebszustand zugeordneten Vor-Menge an Stickoxid-Bestandteilen durch die Recheneinrichtung (12) ermittelt wird.

3. Verfahren nach Anspruch 1 oder 2,
**dadurch gekennzeichnet, dass**
ein stromauf des ersten SCR-Katalysators (30) angeordneter Feuchtigkeitsspeicher (24) der Abgasanlage (20) herangezogen wird, welcher zumindest einen Teil des aus dem Abgas (14) auskondensierten Wassers auf dessen Feuchtigkeitsspeicher-Oberfläche adsorbiert.

4. Verfahren nach Anspruch 3,
**dadurch gekennzeichnet, dass**
als der Feuchtigkeitsspeicher (24) ein Oxidationskatalysator und/oder ein Stickoxid-Speicherkatalysator herangezogen wird.

5. Verfahren nach einem der vorhergehenden Ansprüche,
**dadurch gekennzeichnet, dass**
ein stromab des ersten SCR-Katalysators (30) angeordneter, zweiter SCR-Katalysator (40) der Abgasanlage (20) zur Abgasnachbehandlung herangezogen wird.

6. Verbrennungskraftmaschine (10) mit einer Abgasanlage (20), ausgebildet zur Durchführung eines Verfahrens nach einem der Ansprüche 1 bis 5.

7. Kraftfahrzeug (K) mit einer Verbrennungskraftmaschine (10) nach Anspruch 6.

## Claims

1. Method for operating an exhaust system (20) for an internal combustion engine (10) of a motor vehicle (K), which is acted upon by exhaust gas (14) emitted by the internal combustion engine (10), and in which the exhaust gas (14) is supplied to at least a first SCR catalytic converter (30) of the exhaust system (20), comprising at least the following steps occurring after a cold start of the internal combustion engine (10), wherein in the method at least one pre-operating state of at least the first SCR catalytic converter (30), which is present temporally before the cold start and is determined by means of a computing device (12), is used:
a. Acting upon the first SCR catalytic converter (30) with exhaust gas (14), whereby nitrogen oxides are adsorbed by means of the first SCR catalytic converter (30), while at least in an exhaust gas guide pipe (22) of the exhaust system arranged upstream of the first SCR catalytic converter (30) and supplying the exhaust gas (14) to the first SCR catalytic converter (30), water condenses out from the exhaust gas (14);
b. Heating the exhaust gas guide pipe (22), whereby the water condensed out from the exhaust gas (14) evaporates upstream of the first SCR catalytic converter (30), is at least partially supplied with the exhaust gas (14) to the first SCR catalytic converter (30) and is adsorbed on a first catalytic converter surface of the first SCR catalytic converter (30);
c. At least partial reduction of nitrogen oxide components stored on the first catalytic converter surface as a result of a heating of the catalytic converter surface caused by exothermic reaction of the water on the catalytic converter surface as well as by exhaust gas temperature increase as a result of the fired operation of the internal combustion engine (10);
d. Determining an actual reducing agent quantity adsorbed on the first catalytic converter surface and associated with the first SCR catalytic converter (30) by means of the computing device (12) in dependence on the quantity of the water on the first catalytic converter surface, in dependence on a mass flow of the exhaust gas (14), in dependence on a catalytic converter temperature (T1) of the first SCR catalytic converter (30), in dependence on a quantity of nitrogen oxide components adsorbed in the first SCR catalytic converter (30) as well as in dependence on a pre-reducing agent quantity associated with the pre-operating state and adsorbed on the first catalytic converter surface;
e. Comparing a target reducing agent quantity associated with the first SCR catalytic converter (30) with the actual reducing agent quantity by means of the computing device (12);
f. Metering in a compensation reducing agent quantity, which characterizes a difference value between the target reducing agent quantity and the actual reducing agent quantity, by means of a first metering unit (32) of the exhaust system (20), which is controlled by the computing device (12) and which admixes the compensation reducing agent quantity to the exhaust gas (14) upstream of the first SCR catalytic converter (30) as a result of the control by the computing device (12).

2. Method according to claim 1,
**characterized in that**
the actual reducing agent quantity is determined in dependence on at least one pre-water quantity associated with the pre-operating state and adsorbed on the first SCR catalytic converter (30) and/or in dependence on at least one pre-quantity of nitrogen oxide components associated with the pre-operating state and adsorbed on the first SCR catalytic converter (30) by the computing device (12).

3. Method according to claim 1 or 2,
**characterized in that**
a moisture accumulator (24) of the exhaust system (20) arranged upstream of the first SCR catalytic converter (30) is used, which adsorbs at least a part of the water condensed out from the exhaust gas (14) on its moisture accumulator surface.

4. Method according to claim 3,
**characterized in that**
an oxidation catalytic converter and/or a nitrogen oxide storage catalytic converter is used as the moisture accumulator (24).

5. Method according to one of the preceding claims,
**characterized in that**
a second SCR catalytic converter (40) of the exhaust system (20) arranged downstream of the first SCR catalytic converter (30) is used for exhaust gas aftertreatment.

6. Internal combustion engine (10) with an exhaust system (20), designed for carrying out a method according to one of claims 1 to 5.

7. Motor vehicle (K) with an internal combustion engine (10) according to claim 6.

## Revendications

1. Procédé pour faire fonctionner un système d'échappement (20) pour un moteur à combustion interne (10) d'un véhicule automobile (K), qui est soumis à des gaz d'échappement (14) émis par le moteur à combustion interne (10), et dans lequel les gaz d'échappement (14) sont amenés à au moins un premier catalyseur SCR (30) du système d'échappement (20), comprenant au moins les étapes suivantes se produisant après un démarrage à froid du moteur à combustion interne (10), le procédé utilisant au moins un état de pré-fonctionnement du premier catalyseur SCR (30) au moins, qui est présent temporellement avant le démarrage à froid et est déterminé au moyen d'un dispositif de calcul (12) :
a. Soumission du premier catalyseur SCR (30) à des gaz d'échappement (14), par quoi des oxydes d'azote sont adsorbés au moyen du premier catalyseur SCR (30), tandis qu'au moins dans un tuyau de guidage de gaz d'échappement (22) du système d'échappement disposé en amont du premier catalyseur SCR (30) et amenant les gaz d'échappement (14) au premier catalyseur SCR (30), de l'eau se condense à partir des gaz d'échappement (14) ;
b. Chauffage du tuyau de guidage de gaz d'échappement (22), par quoi l'eau condensée à partir des gaz d'échappement (14) s'évapore en amont du premier catalyseur SCR (30), est au moins partiellement amenée avec les gaz d'échappement (14) au premier catalyseur SCR (30) et est adsorbée sur une première surface de catalyseur du premier catalyseur SCR (30) ;
c. Réduction au moins partielle de constituants d'oxydes d'azote stockés sur la première surface de catalyseur par suite d'un échauffement de la surface de catalyseur provoqué par une réaction exothermique de l'eau sur la surface de catalyseur ainsi que par une augmentation de température des gaz d'échappement par suite du fonctionnement alimenté du moteur à combustion interne (10) ;
d. Détermination d'une quantité réelle d'agent réducteur adsorbée sur la première surface de catalyseur et associée au premier catalyseur SCR (30) au moyen du dispositif de calcul (12) en fonction de la quantité de l'eau sur la première surface de catalyseur, en fonction d'un débit massique des gaz d'échappement (14), en fonction d'une température de catalyseur (T1) du premier catalyseur SCR (30), en fonction d'une quantité de constituants d'oxydes d'azote adsorbés dans le premier catalyseur SCR (30) ainsi qu'en fonction d'une quantité préalable d'agent réducteur associée à l'état de pré-fonctionnement et adsorbée sur la première surface de catalyseur ;
e. Comparaison d'une quantité cible d'agent réducteur associée au premier catalyseur SCR (30) avec la quantité réelle d'agent réducteur au moyen du dispositif de calcul (12) ;
f. Dosage d'une quantité de compensation d'agent réducteur, qui caractérise une valeur de différence entre la quantité cible d'agent réducteur et la quantité réelle d'agent réducteur, au moyen d'une première unité de dosage (32) du système d'échappement (20), qui est commandée par le dispositif de calcul (12) et qui ajoute la quantité de compensation d'agent réducteur aux gaz d'échappement (14) en amont du premier catalyseur SCR (30) par suite de la commande par le dispositif de calcul (12).

2. Procédé selon la revendication 1,
**caractérisé en ce que**
la quantité réelle d'agent réducteur est déterminée en fonction d'au moins une quantité préalable d'eau associée à l'état de pré-fonctionnement et adsorbée sur le premier catalyseur SCR (30) et/ou en fonction d'au moins une quantité préalable de constituants d'oxydes d'azote associée à l'état de pré-fonctionnement et adsorbée sur le premier catalyseur SCR (30) par le dispositif de calcul (12).

3. Procédé selon la revendication 1 ou 2,
**caractérisé en ce qu'**
un accumulateur d'humidité (24) du système d'échappement (20) disposé en amont du premier catalyseur SCR (30) est utilisé, lequel adsorbe au moins une partie de l'eau condensée à partir des gaz d'échappement (14) sur sa surface d'accumulateur d'humidité.

4. Procédé selon la revendication 3,
**caractérisé en ce qu'**
un catalyseur d'oxydation et/ou un catalyseur piège à oxydes d'azote est utilisé comme accumulateur d'humidité (24).

5. Procédé selon l'une des revendications précédentes,
**caractérisé en ce qu'**
un deuxième catalyseur SCR (40) du système d'échappement (20) disposé en aval du premier catalyseur SCR (30) est utilisé pour le post-traitement des gaz d'échappement.

6. Moteur à combustion interne (10) avec un système d'échappement (20), conçu pour la mise en œuvre d'un procédé selon l'une des revendications 1 à 5.

7. Véhicule automobile (K) avec un moteur à combustion interne (10) selon la revendication 6.
